# FASCICULE DE BREVET EUROPEEN

(11) **EP 0 463 667 B1**
(45) Date de publication et mention de la délivrance du brevet: **17.12.1997**
(21) Numéro de dépôt: 91201457.8
(22) Date de dépôt: 13.06.1991
(51) Int. Cl.: B32B 27/18, C08L 29/04

(54) **Complexes multicouches coextrudés à l'intervention de compositions de résines imperméables renforcées aux chocs et leur utilisation pour la confection de réservoirs à carburants**
Coextrudierte Mehrschichtstrukturen bestehend aus schlagfesten undurchlässigen Harzen und ihre Verwendung zur Herstellung von Treibstoffbehältern
Coextruded multilayer complexes comprising shock-reinforced impermeable resins, and the use thereof in the production of fuel tanks

(30) Priorité: 22.06.1990 BE 9000644
(43) Date de publication de la demande: 02.01.1992
(73) Titulaire: SOLVAY (Société Anonyme), B-1050 Bruxelles (BE)
(72) Inventeur: Delimoy, Didier, B-1325 Chaumont-Gistoux (BE); de Longree, Pierre, Caerphilly CF83 3J6 (GB)
(74) Mandataire: Marckx, Frieda

(56) Documents cités:
- FR-A- 2 285 231
- DATABASE CHEMICAL ABSTRACTS (HOST STN), vol. 94, no. 20, 1980, résumé no. 157788B, Columbus, Ohio, US; & JP-A-55 155 042 (MITSUBISHI CHEM. IND. CO.) 03- 12-1980

## Description

La présente invention concerne des complexes multicouches coextrudés à l'intervention de compositions de résines imperméables renforcées aux chocs et leur utilisation pour la confection de réservoirs à carburants. Elle concerne plus particulièrement des complexes multicouches coextrudés à l'intervention de polyoléfines et de compositions de résines imperméables renforcées aux chocs à base de copolymères hydrolysés d'acétate de vinyle et d'éthylène, ainsi que l'utilisation de tels complexes pour la confection de réservoirs à carburants.

Les copolymères hydrolysés d'acétate de vinyle et d'éthylène, communément appelés copolymères EVOH, constituent des copolymères thermoplastiques à structure semi-crystalline coextrudables avec les polyoléfines et caractérisés essentiellement par leur très bonne imperméabilité aux gaz et aux arômes secs. Des complexes multicouches au sein desquels sont associées des couches à base de polyoléfines, tels que le polyéthylène ou le polypropylène, à une couche en copolymère EVOH trouvent déjà des applications multiples dans le domaine de l'emballage, par exemple pour le conditionnement de produits alimentaires et de médicaments (par exemple demande de brevet FR-A-2,285,231). Néanmoins, pour des applications exigeantes sur le plan de la résistance aux chocs telles que, par exemple, l'emballage de produits toxiques ou volatils, de tels complexes multicouches à base de polyoléfines et de copolymères EVOH sont inutilisables.

On a déjà proposé d'améliorer la résistance aux chocs de compositions à base de copolymères EVOH destinées au moulage d'articles façonnés ayant un bel aspect de surface par incorporation d'un copolymère d'éthylène et d'une α-oléfine ayant au moins 3 atomes de carbone modifié par greffage d'un acide α-β-éthyléniquement insaturé (demande de brevet JP-A-80,155,042). Ce document est totalement muet quant aux propriétés d'imperméabilité des copolymères EVOH et de l'incidence de l'incorporation d'additifs polymériques sur ladite imperméabilité.

La présente invention vise à procurer des complexes multicouches coextrudés à l'intervention de polyoléfines et de compositions de résines imperméables à base de copolymères hydrolysés d'acétate de vinyle et d'éthylène qui présentent à la fois une imperméabilité et une résistance aux chocs élevées, ainsi que l'utilisation de tels complexes pour la confection de réservoirs à carburants.

A cet effet, l'invention procure des complexes multicouches coextrudés à l'intervention de polyoléfines et de compositions de résines imperméables renforcées aux chocs à base de copolymères hydrolysés d'acétate de vinyle et d'éthylène comprenant, à titre d'additif améliorant la résistance aux chocs, des copolymères élastomères d'éthylène et de propylène modifiés par greffage d'un acide carboxylique α,β-éthyléniquement insaturé.

Les copolymères élastomères d'éthylène et de propylène ("copolymères EPR") utilisables pour le greffage par un acide carboxylique α,β-éthyléniquement insaturé comprennent, en général, au moins 40 % et pas plus de 95 % molaires d'unités monomériques dérivées de l'éthylène, le solde étant constitué par des unités monomériques dérivées du propylène. Ils comprennent, de préférence, de 45 à 85 % molaires d'unités monomériques dérivées de l'éthylène et de 55 à 15 % molaires d'unités monomériques dérivées du propylène.

Par acide carboxylique α,β-éthyléniquement insaturé, on entend désigner aux fins de la présente invention, les acides α-β-éthyléniquement insaturés monocarboxyliques, dicarboxyliques et leurs anhydrides, ainsi que leurs mélanges tels que, par exemple, l'acide acrylique, l'acide méthacrylique, l'acide maléique, l'acide fumarique, l' anhydride maléique et leurs mélanges. On donne la préférence aux copolymères EPR greffés par de l'anhydride maléique.

Les copolymères EPR modifiés par un acide carboxylique α,β-éthyléniquement insaturé ("copolymères EPR modifiés") s'obtiennent, de manière connue, par mise en réaction de copolymères EPR à l'état fondu ou en solution avec un acide carboxylique α,β-éthyléniquement insaturé en présence d'un peroxyde. Des copolymères EPR modifiés présentant une teneur donnée en greffons dérivés d'un acide carboxylique α,β-éthyléniquement insaturé peuvent être obtenus, soit directement par greffage de faibles quantités d'acide carboxylique α,β-éthyléniquement insaturé, soit par dilution d'un copolymère EPR modifié par des quantités importantes d'acide carboxylique α,β-éthyléniquement insaturé avec du copolymère EPR non modifié. Dans ce dernier cas, on entend par copolymères EPR modifiés, les mélanges de copolymère EPR non modifié et de copolymère EPR modifié.

La teneur pondérale des copolymères EPR modifiés en unités monomériques dérivées d'un acide carboxylique α,β-éthyléniquement insaturé tel que défini ci-dessus est, en général, comprise entre 0,1 et 1,5 % en poids et, de préférence, entre 0,6 et 1,2 % en poids.

Les copolymères EPR modifiés utilisables selon la présente invention comprennent donc, en général, de 40 à 95 % molaires d'unités monomériques dérivées de l'éthylène, de 60 à 5 % molaires d'unités monomériques dérivées du propylène et de 0,1 à 1,5 % en poids d'unités monomériques dérivées d'un acide carboxylique α,β-éthyléniquement insaturé. On donne plus particulièrement la préférence aux copolymères EPR modifiés comprenant de 45 à 85 % molaires d'unités monomériques dérivées de l'éthylène, de 55 à 15 % molaires d'unités monomériques dérivées du propylène et de 0,6 à 1,2 % en poids d'unités monomériques dérivées d'un acide carboxylique α,β-éthyléniquement insaturé.

La teneur en copolymère EPR modifié des compositions à base de résine imperméable renforcée aux chocs ("copolymère EVOH renforcé aux chocs") n'est pas particulièrement critique. L'incorporation de faibles quantités de copolymère EPR modifié, de l'ordre de quelques pourcents en poids, permet déjà d'améliorer la résistance aux chocs des objets façonnés par coextrusion. Au-delà d'environ 35 % en poids, il n'y a plus de gain significatif en résistance au choc. Les copolymères EVOH renforcés aux chocs mis en oeuvre selon l'invention comprennent donc, en général, de 5 à 35 % en poids environ de copolymère EPR modifié et, de préférence, de 15 et 25 % en poids.

Un effet surprenant de la présente invention réside dans le fait que l'incorporation de copolymères EPR modifiés dans les proportions précitées n'entraîne pas une modification significative de l'imperméabilité des copolymères EVOH aux gaz et aux arômes secs.

Un autre aspect surprenant de la présente invention réside dans l'imperméabilité élevée à l'essence pure et aux mélanges essence-alcool des complexes multicouches coextrudés selon l'invention laquelle est, par ailleurs, très largement supérieure à celle de complexes multicouches similaires dans lesquels la résine barrière est un polyamide.

Par copolymère hydrolysé d'acétate de vinyle et d'éthylène (copolymère EVOH), on entend désigner aux fins de la présente invention, les copolymères hydrolysés d'acétate de vinyle et d'éthylène contenant de 20 à 60 moles % et, de préférence, de 25 à 50 moles % d'unités monomériques dérivées de l'éthylène et ayant un degré d'hydrolyse de 96 % au moins et, de préférence, de 98 % au moins.

Les compositions de résines imperméables renforcées aux chocs sont fabriquées avantageusement par mélange de tous les ingrédients en phase fondue dans une extrudeuse avec, le cas échéant, une étape de prémélange à sec.

Les polyoléfines utilisables pour réaliser les complexes multicouches coextrudés selon l'invention comprennent, notamment, le polyéthylène et plus particulièrement le polyéthylène haute densité, ainsi que le polypropylène.

Outre une couche en copolymère EVOH renforcé aux chocs et une ou plusieurs couches en polyoléfines, les complexes multicouches selon l'invention comprennent généralement une ou plusieurs couches d'adhésif polymérique destiné à lier entre elles les couches en polyoléfine et en copolymère EVOH renforcé. Pour ce faire, on utilise les adhésifs polymériques usuellement recommandés pour lier des polyoléfines à des copolymères EVOH, tels que les adhésifs extrudables obtenus par copolymérisation ou greffage de molécules polaires sur des chaînes macromoléculaires non polaires. A titre d'exemples non limitatifs de tels adhésifs polymériques, on peut mentionner les adhésifs constitués de copolymères d'éthylène et d'acide acrylique ou encore les polyoléfines, polyéthylène ou polypropylène, modifiées par greffage d'anhydride maléique, la préférence étant donnée aux polyoléfines greffées d'anhydride maléique.

Il est entendu que chacun des polymères constitutifs des complexes multicouches coextrudés peut comprendre les additifs usuels utilisés à la mise en oeuvre de ce polymère tels que, par exemple, des stabilisants thermiques, des lubrifiants, des pigments, etc.

L'expression "complexe multicouche coextrudé" englobe les complexes multicouches coextrudés-soufflés obtenus par soufflage d'une paraison coextrudée.

Pour la réalisation des complexes multicouches coextrudés selon l'invention, on peut faire appel aux techniques usuelles de coextrusion et de coextrusion-soufflage à travers une filière, plate ou ronde, à bloc d'alimentation ("feedblock") ou à multicanaux ("multimanifold"). Ces techniques se caractérisent par le fait que le flux des polymères fondus constitutifs des différentes couches se joignent et cheminent ensemble à l'état fondu avant la sortie de la filière unique. Les complexes multicouches selon l'invention peuvent donc se présenter sous forme de feuilles, de plaques, de tubes, de préformes ou de corps creux etc.

L'épaisseur des couches polymériques constitutives des complexes multicouches selon l'invention et l'épaisseur totale desdites structures n'est pas critique et dépend bien entendu de l'usage auquel on les destine et des niveaux d'imperméabilité et de résistance au choc recherchés. Pour fixer les idées, l'épaisseur totale des complexes multicouches est comprise, en général, entre 0,5 et 7 mm, la ou les couches en polyoléfine ayant des épaisseurs pouvant varier entre 0,2 et 6,5 mm. L'épaisseur de la couche "barrière" est en général comprise entre 50 et 250 microns et celle des couches en polymère adhésif entre 10 et 150 microns.

Les complexes multicouches selon l'invention comprennent donc en général au moins trois couches constituées d'une couche externe en polyoléfine, d'une couche intermédiaire en adhésif polymérique et d'une couche externe constituée d'une composition de résine imperméable renforcée aux chocs (copolymère EVOH renforcé aux chocs). Des complexes coextrudés à trois couches préférés comprennent trois couches constituées d'une couche externe en polyéthylène haute densité, d'une couche intermédiaire en adhésif polymérique et d'une couche externe constituée d'une composition de résine imperméable renforcée aux chocs (copolymère EVOH renforcé aux chocs). De tels complexes sont utilisables, par exemple, pour la fabrication de flacons destinés au conditionnement de produits phytosanitaires dans lesquels la couche en résine imperméable renforcée aux chocs constitue la couche interne. D'autres complexes coextrudés à trois couches préférés comprennent trois couches constituées d'une couche externe en polypropylène, d'une couche intermédiaire en adhésif polymérique et d'une couche externe constituée d'une composition de résine imperméable renforcée aux chocs (copolymère EVOH renforcé aux chocs). De tels complexes sont utilisables, par exemple, pour la fabrication de tubes pour le chauffage par le sol dans lesquels la couche en résine imperméable renforcée aux chocs constitue la couche externe.

Dans le cas où le copolymère EVOH renforcé aux chocs ne peut constituer une couche externe suite, par exemple, à sa sensibilité à l'humidité ou à certains acides ou oxydants, les complexes multicouches selon l'invention comprennent généralement cinq couches constitués essentiellement de deux couches externes en polyoléfine pouvant, le cas échéant, contenir des déchets recyclés, d'une couche interne constituée d'une composition de résine imperméable renforcée aux chocs (copolymère EVOH renforcé aux chocs) et de deux couches intermédiaires en adhésif polymérique. Des déchets recyclés peuvent, le cas échéant, constituer une ou plusieurs couches distinctes situées entre une couche en polyoléfine et une couche en adhésif polymérique. Dans ce cas, les complexes multicouches peuvent comprendre six couches ou plus.

Des complexes multicouches coextrudés particulièrement préférés selon la présente invention comprennent essentiellement deux couches externes en polyoléfine et, plus particulièrement encore en polyéthylène haute densité, une couche interne constituée d'une composition de résine imperméable renforcée aux chocs (copolymère EVOH renforcé aux chocs) et deux couches intermédiaires en adhésif polymérique. De tels complexes conviennent tout particulièrement pour la coextrusion-soufflage de corps creux destinés au stockage de carburants.

L'utilisation de complexes multicouches coextrudés de ce type comprenant essentiellement deux couches externes en polyéthylène haute densité, une couche interne constituée d'une composition de résine imperméable renforcée aux chocs (EVOH selon l'invention (copolymère EVOH renforcé aux chocs) et deux couches intermédiaires en adhésif polymérique pour la confection de réservoirs à carburants, tels que jerrycans et réservoirs pour voitures automobiles, constitue un autre aspect de la présente invention.

Les exemples qui suivent sont destinés à illustrer les complexes multicouches selon l'invention. Les polymères mis en oeuvre dans les exemples ci-dessous présentent les caractéristiques suivantes :
- copolymère hydrolysé d'acétate de vinyle et d'éthylène (EVOH) : teneur molaire en éthylène : 32 +/-2 %; taux d'hydrolyse molaire : > 99,5 %; indice de fluidité ("melt index") : 1.3 g/10 min. à 190°C sous une charge de 2160 g;
- copolymère élastomère d'éthylène et de propylène greffé d'anhydride maléique (EPR modifié) : teneur molaire en unités monomériques dérivées de l'éthylène : environ 83 %; teneur molaire en unités monomériques dérivées du propylène : environ 17 %; teneur pondérale en unités monomériques dérivées de l'anhydride maléique : 0,7 %; indice de fluidité 8,5 g/10 min. à 230°C sous une charge de 10 kg;
- polyamide 12 (PA 12) : polyamide 12 commercialisé par CHEMISCHE WERKE HUELS sous la marque VESTAMID L 2140 ayant un indice de fluidité égal à 35 ml/10 min. mesuré selon la norme ISO 1133.
- polyamide 6 renforcé aux chocs (PA 6 RF) : polyamide 6 renforcé aux chocs commercialisé par BASF sous la marque UTLRAMID KR 4430 dont la viscosité à 240°C et 100 sec⁻¹ s'élève à 1300 Pas.
- polyéthylène haute densité (PEHD) : polyéthylène haute densité commercialisé par SOLVAY et Cie sous la marque ELTEX B 5920; indice de fluidité : 0,44-0,50 g/10 min. à 190°C sous une charge de 5 kg;
- adhésif polymérique (ADHESIF) : polyéthylène modifié par greffage d'anhydride maléique commercialisé sous la marque ADMER L 2100 par MITSUI PETROCHEMICAL IND. : indice de fluidité : 1,2g/min. à 190°C selon la norme ASTM D 1238

L'exemple 1 concerne une composition comprenant 80 % en poids de copolymère EVOH et 20 % en poids de copolymère EPR modifié.

L'exemple 2, de comparaison, concerne une composition constituée à 100 % de copolymère EVOH.

L'exemple 3, de comparaison, concerne une composition constituée à 100 % de polyamide 12 (PA 12).

L'exemple 4, de comparaison, concerne une composition constituée à 100 % de polyamide 6 renforcé aux chocs (PA 6 RF).

Le mélange de copolymère EVOH et de copolymère EPR modifié mis en oeuvre à l'exemple l est fabriqué dans une extrudeuse à double vis corotatives interpénétrées, la température à la filière étant comprise entre 200 et 220°C, puis granulé. Les autres polymères "barrière" évalués à titre de comparaison se présentent sous la forme de granules.

### 1. Evaluation de la résistance aux chocs des compositions.

A partir du mélange selon l'exemple 1 et des polymères "barrière" selon les exemples de comparaison 2 à 4, on a injecté, dans les conditions précisées ci-dessous, des barreaux de 12,7 x 63,5 x 3,2 mm (l x L x h) sur lesquels on a mesuré la résistance aux chocs sur éprouvette entaillée à 23°C et à -40°C selon la norme ISO 180/4A.

Conditions d'injection :
- pression d'injection : 1.500 bars
- pression de maintien : 1000 bars
- vitesse d'injection : 50 mm/sec
- température du moule : 35°C
- température matière :
   exemple 1 : 235°C
   exemple 2 : 225°C
   exemple 3 : 230°C
   exemple 4 : 260°C
Les résultats de la mesure figurent dans le Tableau 1 en annexe.

De la comparaison de ces résultats, il appert que le mélange de copolymères EVOH et EPR modifié contenant 20 % en poids de copolymère EPR modifié (exemple 1) présente une résistance aux chocs, tant à 23°C qu'à -40°C, très largement supérieure à celle d'un copolymère EVOH (exemple 2, de comparaison) ou d'un polyamide 12 (exemple 3, de comparaison) utilisés seuls et, par ailleurs, du même ordre de grandeur que celle d'un polyamide 6 renforcé aux chocs (exemple 4, de comparaison).

### 2. Evaluation de l'imperméabilité aux carburants des compositions.

Dans cette série d'essais, on a évalué l'imperméabilité des compositions selon les exemples 1, 2 et 4 à l'essence pure normalisée (suivant la norme ECE 34) et au mélange essence normalisée/méthanol 90/10 en volume.

La cellule de mesure utilisée à cet effet est constituée d'une bride latérale métallique d'une hauteur utile de 55mm sur laquelle sont fixées deux plaques carrées injectées sur une presse à injection à partir des compositions selon les exemples 1, 2 et 4, ayant une épaisseur de 1,2 mm et un côté de 120 mm. Les conditions d'injection des plaques ont été les suivantes :
- pression d'injection : 1600 bars
- pression de maintien : 1400 bars
- vitesse d'injection : 80 mm/sec
- température du moule : 35°C
- température matière :
   example 1 : 245°C
   exemple 2 : 220°C
   exemple 4 : 260°C

Ces plaques sont montées de telle façon que la surface des plaques exposée aux carburants s'élève à 90 x 90 mm² . Une fois la cellule remplie du carburant à tester (volume du carburant : 400 ml) et les plaques scellées, celle-ci est placée dans une enceinte conditionnée à 40°C.

Après une période de mise en régime dont la durée dépend du matériau à tester, on observe que les valeurs de la perte de poids journalière de la cellule (exprimées en mg/jour) deviennent constantes. Dés le régime constant atteint, on mesure régulièrement et porte en diagramme la perte de poids de la cellule en mg (ordonnée) en fonction du temps en jours (abscisse). Le coefficient angulaire de la droite obtenue par régression linéaire sur les points expérimentaux fournit une mesure de l'imperméabilité (perte de poids journalière, exprimée en mg, de la cellule pour une surface totale exposée de 16.200 mm² et une épaisseur de 1,2 mm).

Le Tableau 2 en annexe fournit les valeurs moyennes pour 3 mesures de l'imperméablité des compositions selon l'exemple 1 et les exemples de comparaison 2 et 4.

La comparaison des résultats montre la supériorité de la composition selon l'exemple 1 sur le plan de l'imperméabilité aux mélanges essence-méthanol par comparaison avec un polyamide renforcé aux chocs.

### 3. Evaluation de l'imperméabilité aux carburants de complexes multicouches extrudés.

Dans cette série d'essais, on a évalué l'imperméabilité à l'essence normalisée (suivant la norme ECE 34) et au mélange essence normalisée/méthanol 90/10 (en volume) de flacons multicouches ayant une contenance de 1 litre et pesant en moyenne 130 g (dit de type phytosanitaire), fabriqués sur une machine de coextrusion-soufflage. Les flacons à cinq couches de structure symétrique évalués présentent deux couches externes en PEHD, une couche centrale en résine "barrière" selon les exemples 1, 2 ou 3 et des couches adhésives intermédiaires en polymère adhésif (définitions : cf. ci-dessus).

Les températures à la filière des différents polymères constitutifs des flacons à cinq couches coextrudés-soufflés ont été les suivantes :
PEHD : 220°C (exemples 1, 2 et 3)
Adhésif polymérique : 185°C (exemples 1, 2 et 3)
Mélange EVOH/EPR modifié : 220°C (exemple 1, selon l'invention)
EVOH : 175°C (exemple 2, de comparaison)
PA 12 : 220°C (exemple 3, de comparaison)

La valeur moyenne (8 mesures) de l'épaisseur des couches des flacons multicouches coextrudés-soufflés évalués ci-après s'élevait à :
couche externe en PEHD : 1030 microns +/- 40 microns
couche externe opposée en PEHD : 570 microns +/- 35 microns
couches adhésives : 40 microns +/- 5 microns
couches en résines " barrière" : 105 microns +/- 5 microns

A partir de chacune des compositions selon les exemples 1, 2 et 3, on a fabriqué cinq flacons coextrudés-soufflés. A titre de comparaison, on a également fabriqué cinq flacons monocouches en PEHD de même contenance dont l'épaisseur des parois s'élevait à 1800 microns +/- 5 microns, c'est-à-dire d'une épaisseur totale identique à celle des parois des flacons multicouches (exemple 5, de comparaison).

Chacun de ces flacons a été rempli du carburant à tester et conditionné à 40°C. L'évaluation de l'imperméabilité des flacons s'est effectuée de manière identique à celle des plaques monocouches, à savoir pesée (avec une précision de 1 mg) des flacons en fonction du temps et, dès la perte de poids journalière devenue constante, relevé des points experimentaux permettant d'évaluer le coefficient angulaire de la droite. Le Tableau 3 en annexe fournit les résultats de l'évaluation de l'imperméabilité (moyenne de cinq mesures) des flacons, exprimée en mg/jour (perte de poids journalière, exprimée en mg, des flacons).

La comparaison des résultats montre le gain très substantiel en imperméabilité à l'essence pure et aux mélanges essence-alcool que procurent les complexes multicouches selon l'invention (exemple 1) par comparaison avec des complexes multicouches à base de polyamide 12 (exemple 3, de comparaison) dont l'imperméabilité aux mélanges essence-alcool est à peine plus élevée que celle de flacons monocouches en PEHD de même épaisseur totale (exemple 5, de comparaison).

**TABLEAU I**

| N° de l'exemple | Résistance aux chocs; J/m (norme ISO 180/4A) | |
|---|---|---|
| | à 23°C | à -40°C |
| 1 | > 1000 | 255 |
| 2 (R) | 20 | 15 |
| 3 (R) | 280 | 70 |
| 4 (R) | > 1000 | 290 |

**TABLEAU II**

| N° de l'exemple | Imperméabilité des compositions | |
|---|---|---|
| | essence pure | mélange essence/méthanol |
| 1 | 60 | 130 |
| 2 (R) | 60 | 70 |
| 4 (R) | -- | 1350 |

**TABLEAU III**

| N° de l'exemple | Imperméabilité des flacons multicouches | |
|---|---|---|
| | essence pure | mélange essence/méthanol |
| 1 | 9 | 300 |
| 2 (R) | 7 | 90 |
| 3 (R) | 230 | 2400 |
| 5 (R) | 3100 | 3000 |

## Revendications

1. Complexes multicouches coextrudés comprenant une couche à base de polyoléfines et une couche à base d'une composition de résines imperméables renforcées aux chocs, caractérisés en ce que la composition de résines imperméables renforcées aux chocs est à base de copolymères hydrolysés d'acétate de vinyle et d'éthylène et comprend à titre d'additif améliorant la résistance aux chocs des copolymères élastomères d'éthylène et de propylène modifiés par greffage d'un acide carboxylique α,β-éthyléniquement insaturé.

2. Complexes multicouches coextrudés suivant la revendication 1, caractérisés en ce que les copolymères élastomères d'éthylène et de propylène modifiés comprennent de 40 à 95 % molaires d'unités monomériques dérivées de l'éthylène, de 60 à 5 % molaires d'unités monomériques dérivées du propylène et de 0,1 à 1,5 % en poids d'unités monomériques dérivées d'un acide carboxylique α,β-éthyléniquement insaturé.

3. Complexes multicouches coextrudés suivant la revendication 1, caractérisés en ce que les copolymères élastomères d'éthylène et de propylène modifiés comprennent de 45 à 85 % molaires d'unités monomériques dérivées de l'éthylène, de 55 à 15 % molaires d'unités monomériques dérivées du propylène et de 0,6 à 1,2 % en poids d'unités monomériques dérivées d'un acide carboxylique α,β-éthyléniquement insaturé.

4. Complexes multicouches coextrudés suivant l'une quelconque des revendications 1 à 3, caractérisés en ce que les copolymères élastomères d'éthylène et de propylène sont modifiés par greffage d'anhydride maléique.

5. Complexes multicouches coextrudés suivant l'une quelconque des revendications 1 à 4, caractérisés en ce que les compositions de résines imperméables comprennent de 5 à 35 % en poids de copolymères élastomères d'éthylène et de propylène modifiés.

6. Complexes multicouches coextrudés suivant la revendication 5, caractérisés en ce que les compositions de résines imperméables comprennent de 15 à 25 % en poids de copolymères élastomères d'éthylène et de propylène modifiés.

7. Complexes muticouches coextrudés suivant la revendication 1, caractérisés en ce qu'ils comprennent trois couches constituées d'une couche externe en polyéthylène haute densité, d'une couche intermédiaire en adhésif polymérique et d'une couche externe constituée d'une composition de résine imperméable renforcée aux chocs.

8. Complexes muticouches coextrudés suivant la revendication 1, caractérisés en ce qu'ils comprennent trois couches constituées d'une couche externe en polypropylène, d'une couche intermédiaire en adhésif polymérique et d'une couche externe constituée d'une composition de résine imperméable renforcée aux chocs.

9. Complexes multicouches coextrudés suivant la revendication 1, caractérisés en ce qu'ils comprennent essentiellement deux couches externes en polyéthylène haute densité, une couche interne constituée d'une composition de résine imperméable renforcée aux chocx et deux couches intermédiaires en adhésif polymérique.

10. Utilisation des complexes multicouches suivant la revendication 9 pour la confection de réservoirs à carburants.

## Claims

1. Coextruded multilayer composites comprising a layer based on polyolefins and a layer based on an impact-reinforced impervious resins composition, characterised in that the impact-reinforced impervious resins composition is based on hydrolysed copolymers of vinyl acetate and ethylene and comprises, as an additive improving the impact strength, elastomeric copolymers of ethylene and propylene which are modified by grafting an α,β-ethylenically unsaturated carboxylic acid.

2. Coextruded multilayer composites according to Claim 1, characterised in that the modified elastomeric copolymers of ethylene and propylene comprise from 40 to 95 mol% of ethylene-derived monomer units, from 60 to 5 mol% of propylene-derived monomer units and from 0.1 to 1.5% by weight of monomer units derived from an α,β-ethylenically unsaturated carboxylic acid.

3. Coextruded multilayer composites according to Claim 1, characterised in that the modified elastomeric copolymers of ethylene and propylene comprise from 45 to 85 mol% of ethylene-derived monomer units, from 55 to 15 mol% of propylene-derived monomer units and from 0.6 to 1.2% by weight of monomer units derived from an α,β-ethylenically unsaturated carboxylic acid.

4. Coextruded multilayer composites according to any one of Claims 1 to 3, characterised in that the elastomeric copolymers of ethylene and propylene are modified by grafting with maleic anhydride.

5. Coextruded multilayer composites according to any one of Claims 1 to 4, characterised in that the impervious resin compositions comprise from 5 to 35% by weight of modified elastomeric copolymers of ethylene and propylene.

6. Coextruded multilayer composites according to Claim 5, characterised in that the impervious resin compositions comprise from 15 to 25% by weight of modified elastomeric copolymers of ethylene and propylene.

7. Coextruded multilayer composites according to Claim 1, characterised in that they comprise three layers consisting of an outer layer of high density polyethylene, an intermediate layer of polymeric adhesive and an outer layer consisting of an impact-reinforced impervious resin composition.

8. Coextruded multilayer composites according to Claim 1, characterised in that they comprise three layers consisting of an outer layer of polypropylene, an intermediate layer of polymeric adhesive and an outer layer consisting of an impact-reinforced impervious resin composition.

9. Coextruded multilayer composites according to Claim 1, characterised in that they comprise essentially two outer layers of high density polyethylene, an internal layer consisting of an impact-reinforced impervious resin composition and two intermediate layers of polymeric adhesive.

10. Use of the multilayer composites according to Claim 9 for the manufacture of fuel storage vessels.

## Patentansprüche

1. Coextrudierte Mehrschichtstrukturen, umfassend eine Schicht auf Polyolefinbasis und eine Schicht auf Basis einer stoßverstärkten, undurchlässigen Harzzusammensetzung, dadurch gekennzeichnet, daß die stoßverstärkte, undurchlässige Harzzusammensetzung auf Basis von Hydrolysecopolymeren von Vinylacetat und Ethylen ist und einen Gehalt eines Zusatzes zur Verbesserung der Stoßfestigkeit aus elastomeren Copolymeren von Ethylen und Propylen umfaßt, die durch Aufpfropfen einer α,β-ethylenisch ungesättigten Carbonsäure modifiziert sind.

2. Coextrudierte Mehrschichtstrukturen nach Anspruch 1, dadurch gekennzeichnet, daß die modifizierten elastomeren Copolymere aus Ethylen und Propylen von 40 bis 95 mol-% von Ethylen abgeleitete Monomereinheiten, von 60 bis 5 mol-% von Propylen abgeleitete Monomereinheiten und von 0,1 bis 1,5 Gew.-% von einer α,β-ethylenisch ungesättigten Carbonsäure abgeleitete Monomereinheiten umfassen.

3. Coextrudierte Mehrschichtstrukturen nach Anspruch 1, dadurch gekennzeichnet, daß die modifizierten elastomeren Copolymere aus Ethylen und Propylen von 45 bis 85 mol-% von Ethylen abgeleitete Monomereinheiten, von 55 bis 15 mol-% von Propylen abgeleitete Monomereinheiten und von 0,6 bis 1,2 Gew.-% von einer α,β-ethylenisch ungesättigten Carbonsäure abgeleitete Monomereinheiten umfassen.

4. Coextrudierte Mehrschichtstrukturen nach einem der Ansprüche 1 bis 3, dadurch gekennzeichnet, daß die elastomeren Copolymere aus Ethylen und Propylen durch Aufpfropfen von Maleinsäureanhydrid modifiziert sind.

5. Coextrudierte Mehrschichtstrukturen nach einem der Ansprüche 1 bis 4, dadurch gekennzeichnet, daß die undurchlässigen Harzzusammensetzungen von 5 bis 35 Gew.-% modifizierte elastomere Copolymere von Ethylen und Propylen umfassen.

6. Coextrudierte Mehrschichtstrukturen nach Anspruch 5, dadurch gekennzeichnet, daß die undurchlässigen Harzzusammensetzungen von 15 bis 25 Gew.-% modifizierte elastomere Copolymere von Ethylen und Propylen umfassen.

7. Coextrudierte Mehrschichtstrukturen nach Anspruch 1, dadurch gekennzeichnet, daß sie drei Schichten umfassen, bestehend aus einer äußeren Schicht aus Polyethylen hoher Dichte, einer mittleren Schicht aus einer polymeren Adhäsionsmasse und einer äußeren Schicht, bestehend aus einer stoßverstärkten, undurchlässigen Harzzusammensetzung.

8. Coextrudierte Mehrschichtstrukturen nach Anspruch 1, dadurch gekennzeichnet, daß sie drei Schichten umfassen, bestehend aus einer äußeren Schicht aus Polypropylen, einer mittleren Schicht aus einer polymeren Adhäsionsmasse und einer äußeren Schicht, bestehend aus einer stoßverstärkten, undurchlässigen Harzzusammensetzung.

9. Coextrudierte Mehrschichtstrukturen nach Anspruch 1, dadurch gekennzeichnet, daß sie im wesentlichen zwei äußere Schichten aus Polyethylen hoher Dichte, eine innere Schicht, bestehend aus einer stoßverstärkten, undurchlässigen Harzzusammensetzung, und zwei mittlere Schichten aus einer polymeren Adhäsionsmasse umfassen.

10. Verwendung der Mehrschichtstrukturen nach Anspruch 9 zur Herstellung von Treibstoffbehältern.
